# EUROPÄISCHE PATENTSCHRIFT

(11) **EP 2 537 484 B1**
(45) Veröffentlichungstag und Bekanntmachung des Hinweises auf die Patenterteilung: **21.08.2019**
(21) Anmeldenummer: 12170940.6
(22) Anmeldetag: 06.06.2012
(51) Int. Cl.: A61C 3/025

(54) **Mischvorrichtung für ein dentales Pulverstrahlgerät**
Mixing device for a dental powder jet device
Dispositif de mélange pour un pulvérisateur de poudre dentaire

(30) Priorität: 22.06.2011 DE 102011077995
(43) Veröffentlichungstag der Anmeldung: 26.12.2012
(73) Patentinhaber: Ferton Holding SA, 2800 Delémont (CH)
(72) Erfinder: Olmo, Olivier, 1110 Morges (CH); Donnet, Marcel, 01630 Saint Jean de Gonville (FR)
(74) Vertreter: Müller Schupfner & Partner Patent- und Rechtsanwaltspartnerschaft mbB

(56) Entgegenhaltungen:
- EP-A1- 0 119 735
- EP-A1- 2 036 513
- EP-A2- 0 834 291
- DE-A1- 19 714 276
- GB-A- 1 420 386
- US-A- 2 759 266

## Beschreibung

Die vorliegende Erfindung betrifft eine Mischvorrichtung für ein dentales Pulverstrahlgerät.

Mischvorrichtungen der in Rede stehenden Art sind hinlänglich aus dem Stand der Technik bekannt. So offenbart beispielsweise die DE197 14 276 A1 eine Mischvorrichtung bestehend aus einer als Rotationshohlkörper ausgebildeten Mischkammer, in dessen Innenraum die Enden einer Zuleitung für Druckluft und einer mit einer Mehrfach-Düsenanordnung an einem Sprühkopf einer Griffhülse verbundenen Überführungsleitung für das innerhalb des Rotationshohlkörpers gebildete Pulver-Luft-Gemisch münden. Problematisch bei derartigen Anordnungen ist jedoch, dass während des Betriebs der Mischvorrichtung nicht sichergestellt werden kann, dass das Pulver-Luft-Gemisch homogen gebildet wird und zeitlich während des Betriebs ein konstantes Mischungsverhältnis unabhängig des Pulverfüllstands gewährleistet wird.

Es ist somit Aufgabe der vorliegenden Erfindung, eine Mischvorrichtung für ein dentales Pulverstrahlgerät sowie ein dentales Handinstrument für ein Pulverstrahlgerät vorzusehen, welche ein möglichst homogenes und quantitativ sowie qualitativ nicht schwankendes Pulver-Fluid-Gemisch, unabhängig vom Pulverfüllstand bereitstellen.

Die EP 0 834 291 A2 offenbart ein medizinisches oder dentales Handinstrument mit einem Handstück und einem am Handstück angeordneten Griffteil, einer bezüglich des Griffteils vorderseitig angeordneten Auslassöffnung für den Austritt eines abrasiven Behandlungsmittels und eines Transportfluids, und einen Kupplungsanschluss zum Ankuppeln des Handinstruments an eine Versorgungsleitung für wenigstens ein Transportfluid, wobei der Kupplungsanschluss ein Kupplungsteil einer Kupplung ist. Dabei ist das Kupplungsteil in einem Einsatzteil angeordnet ist, welches in eine Steckfassung oder Steckausnehmung einsteckbar ist.

Die US 2,759,266 offenbart eine Vorrichtung zur Bereitstellung eines Strahls, welcher abrasive Elemente enthält, um ein festgelegtes Gebiet zu bearbeiten, beispielsweise zu säubern oder zu polieren. Dieser Strahl kann dabei unterschiedliche Abrasiv-Elemente enthalten.

Die US 1,420,386 offenbart eine Ausrüstung zum Mischen eines Gasstroms oder zum Einfügen von abrasiven Partikeln in diesen und zum Führen der Mischung zu einer geeigneten Düse.

Die EP 2 036 513 A1 offenbart zwei Düsen, welche entlang einer Innenfläche eines Hohlraums gerichtet sind, wobei sich in dem Hohlraum ein Pulver befindet und wobei die Vermischung des Pulvers mit Luft verbessert wird.

Die EP 0 1197 35 A1 offenbart ein Gerät zur Zahnreinigung und insbesondere ein Gerät für die Entfernung von Zahnstein und Plaque bei Verwendung eines Luftstroms, welcher ein Reinigungspulver enthält, und eines Wasserstroms.

Diese Aufgabe wird durch eine Mischvorrichtung für ein dentales Pulverstrahlgerät mit den Merkmalen des Anspruchs 1 gelöst. Bevorzugte Ausführungsformen sind Gegenstand der abhängigen Ansprüche.

Die Mischvorrichtung dient hierbei insbesondere als Misch- bzw. Wirbelkammer, sodass eine Durchmischung bzw. Verwirbelung des Pulvers mit dem Transportfluid erfolgt. Das Transportfluid kann ein Gas, beispielsweise Luft, oder eine Flüssigkeit, beispielsweise Wasser, oder eine Kombination derselben sein. Der Einlass dient der Zuführung des Transportfluids in den Behälter. Der Auslass dient der Abführung des Gemischs aus Pulver und Transportfluid aus dem Behälter in ein Handstück eines dentalen Pulverstrahlgeräts. Hierfür weist der Auslass eine Vielzahl von Auslassdüsen auf, welche sich im Innenraum des Behälters befinden. Eine Auslassdüse kann als Loch oder Durchbruch in einem in dem Behälter befindlichen Auslasselement ausgebildet sein. Analog hierzu weist der Einlass zumindest eine erste und zumindest eine zweite Einlassdüse auf. Diese sind gleichfalls im Innenraum des Behälters angeordnet. Die erste und zweite Einlassdüse können in ihrer Querschnittskonfiguration gleichfalls als Loch, Durchbruch oder Schlitz ausgebildet sein. Es versteht sich, dass die Querschnittsform und -größe der ersten und zweiten Einlassdüse sowie der Auslassdüse gleich oder verschieden ausgebildet sein können. Erfindungsgemäß schneidet bzw. kreuzt bzw. überschneidet sich die Ausström- bzw. Ausstrahlrichtung der ersten Einlassdüse mit der Einström- bzw. Einströmrichtungen der Auslassdrüsen. In anderen Worten schneiden sich die Strömungsrichtungen des die erste Einlassdüse verlassenden Transportfluids und des in die Auslassdrüsen hineinströmenden Pulver-Transportfluid-Gemischs. Die jeweilige Ein- bzw. Ausströmrichtung kann eine fiktive Gerade der im Bereich des Ein- bzw. Austritts der jeweiligen Düse herrschenden Strömungs- bzw. Flussrichtung sein. Vorteilhafterweise müssen die jeweiligen Düsen in einer bevorzugten Ausführungsform hierzu räumlich nicht direkt aneinander liegen, müssen also beispielsweise bezogen auf den Behälter nicht auf einer Höhe liegen. Praktischerweise verlässt das Transportfluid die Einlassdüsen und tritt das Pulver-Transportfluid-Gemisch in die Auslassdrüsen nicht linear sondern einem Strömungskegel folgend ein. Hierbei müssen sich die Symmetrielinien (d.h. der Rotationssymmetrielinien der Strömungskegel) der Ausströmrichtung der ersten Einlassdüse und der Einströmrichtung einer Auslassdüse nicht schneiden, sondern können um ein Winkelmaß von bis zu 15°, vorzugsweise bis zu 10° und besonders vorzugsweise etwa 5° - 7° versetzt sein. In anderen Worten kann der Einlass - ausgehend von einer Position in welcher sich die Symmetrielinien der Ausströmrichtung der ersten Einlassdüse und der Einströmrichtung einer Auslassdüse schneiden - um vorgenanntes Winkelmaß gedreht sein. Besonders bevorzugt ist es, wenn der Strömungskegel insbesondere der Ausström- bzw. Strahlrichtungen des Transportfluids in einem Bereich bis etwa 25°, vorzugsweise bis etwa 20° und besonders vorzugsweise bis etwa 15° ausgebildet ist. Der Strömungskegel erstreckt sich hierbei - ausgehend von der jeweiligen Düse - zweckmäßigerweise um zumindest das 20-fache, vorzugsweise zumindest das 50-fache und besonders bevorzugt zumindest das 100-fache vom jeweiligen Düsendurchmesser in den Behälter hinein. Die Erstreckung des Strömungskegels kann auch als Freistrahl bezeichnet werden. Der Durchmesser einer Auslassdüse liegt zweckmäßigerweise im Bereich von 0,35 bis 0,75 mm, vorzugsweise 0,4 bis 0,6 mm. Der Durchmesser der Einlassdüsen liegt zweckmäßigerweise im Bereich von 0,4 bis 0,8 mm, vorzugsweise 0,6 bis 0,7 mm. Erfindungsgemäß ist die Ausström- bzw. Strahlrichtung der ersten Einlassdüse auf die Auslassdüsen hin gerichtet. In anderen Worten schneidet die Ausström- bzw.

Strahlrichtung der ersten Einlassdüse die Mündung der Auslassdüsen. Weiterhin ist die Ausström- bzw. Strahlrichtung der zweiten Einlassdüse zur Ausström- bzw. Strahlrichtung der ersten Einlassdüse versetzt ausgerichtet.

Hierbei können die Ausströmrichtung der ersten Einlassdüse und die Ausströmrichtung der zweiten Einlassdüse in derselben Ebene liegen, wobei beide Ausströmrichtungen zweckmäßigerweise in einem Winkel zueinander stehen. Vorteilhafterweise ist der Winkel nicht 0° oder 180°, mit anderen Worten stehen also die Ausströmrichtungen bevorzugt nicht parallel, wenn sie in einer Ebene liegen. Besonders bevorzugt stehen die beiden Ausströmrichtungen der ersten und zweiten Einlassdüse nicht nur in einem Winkel zueinander, sondern liegen zusätzlich noch in verschiedenen Ebenen. Durch diese Anordnung wird gewährleistet, dass das Pulver-Transportfluid-Gemisch homogen und unbeeinflusst vom Pulverfüllstand in dem Behältnis ist. Erzielt wird dies insbesondere dadurch, dass die erste Einlassdüse ausgebildet ist, die Auslassdüsen von dem Pulver freizuhalten, indem die erste Einlassdüse einen Teil des Transportfluids an den Auslassdüsen vorbeibläst und somit einer Ansammlung von Pulver an oder direkt vor den Auslassdüsen verhindert. Um die nötige Zufuhr von Pulver an die Auslassdüsen zu gewährleisten, ist die zweite Einlassdüse vorgesehen. Diese dient als sogenannte Wirbeldüse und sorgt für die Verwirbelung des Pulvers in dem Behälter. Von Vorteil ist es dabei, dass in einer bevorzugten Ausführungsform durch die Wirbelbildung keine spezielle Position der zweiten Einlassdüse relativ zum Behälter und/oder zu dem in dem Behälter befindlichen Pulver nötig ist. Mit anderen Worten muss die zweite Einlassdüse also nicht oder zumindest nicht direkt auf das Pulver gerichtet sein. Beispielsweise muss sie also nicht nach unten gerichtet sein.

Zweckmäßigerweise ist die erste Einlassdüse zu den Auslassdüsen benachbarter angeordnet als die zweite Einlassdüse. In anderen Worten ist die Wegstrecke, die das Transportfluid zu den Auslassdüsen zurücklegen muss, von der ersten Einlassdüse kürzer als von der zweiten Einlassdüse.

Vorteilhafterweise ist die Mischvorrichtung derart ausgebildet, dass die Ausströmrichtung der zweiten Einlassdüse die Einströmrichtungen der Auslassdüsen nicht schneidet oder nicht mit diesen fluchtet. So kann es vorgesehen sein, dass die Strömungsrichtungen der zweiten Einlassdüse und der Auslassdüsen zwar parallel zueinander ausgerichtet sind, jedoch derart versetzt angeordnet sind, dass diese nicht zueinander fluchten. Besonders vorteilhafterweise sind diese jedoch nicht parallel zueinander angeordnet, sondern in einem Winkel ungleich 0° oder 180° zueinander, wobei eine Überschneidung der Ausströmrichtungen der zweiten Einlassdüse und der Auslassdüsen nicht gegeben ist.

Vorteilhafterweise schneidet die Ausströmrichtung der zweiten Einlassdüse die Ausströmrichtung der ersten Einlassdüse nicht. Die erste und zweite Einlassdüse können hierfür insbesondere derart angeordnet sein, dass diese nicht auf einer gemeinsamen Ebene liegen. Zusätzlich oder alternativ können diese auch derart zueinander versetzt sein, dass diese (bei paralleler Strömungsrichtung) auf derselben Ebene liegen, ohne dass sich die Strömungsrichtungen schneiden.

In einer weiteren bevorzugten Ausführungsform stehen die Ausströmrichtungen der ersten und zweiten Einlassdüse in einem Winkel von etwa 60°-120°, vorzugsweise von etwa 80°-100° und besonders bevorzugt etwa 90° zueinander. Durch die Anordnung der Strömungsrichtungen in einem Winkel von etwa 90° wird ein besonders vorteilhaftes homogenes Mischungsverhältnis von Transportfluid und Pulver gewährleistet.

Erfindungsgemäß kann in einer Alternative der Einlass als rohrförmiger Körper ausgebildet, an welchem die erste und zweite Einlassdüse in Strömungsrichtung des Transportfluids versetzt angeordnet sind. Der rohrförmige Körper kann hierfür stirnseitig geschlossen sein, sodass die Einlassdüsen an dessen Mantelfläche vorgesehen sind. Es versteht sich, dass ebenfalls eine der Einlassdüsen an der Stirnseite des rohrförmigen Körpers vorgesehen sein kann, während die verbleibende Einlassdüse an dessen Mantelfläche ausgebildet ist. Die Strömungsrichtung des Transportfluids entspricht hierbei im Wesentlichen der Längserstreckung des rohrförmigen Körpers. Besonders vorteilhafterweise ist die zweite Einlassdüse - in Strömungsrichtung des Transportfluids gesehen - weiter von der Auslassdüse entfernt, als die erste Einlassdüse. In anderen Worten ist die erste Einlassdüse zweckmäßigerweise stromabwärts der zweiten Einlassdüse angeordnet.

Erfindungsgemäß kann in einer Alternative der Einlass aus einem ersten rohrförmigen Körper, welcher die erste Einlassdüse aufweist, und einem zweiten rohrförmigen Körper ausgebildet sein, welcher die zweite Einlassdüse aufweist. Die Einlassdüsen können hierbei stirnseitig des jeweiligen ersten bzw. zweiten rohrförmigen Körpers ausgebildet sein. Zusätzlich oder alternativ können die Einlassdüsen auch an der jeweiligen Mantelfläche des ersten bzw. zweiten rohrförmigen Körpers ausgebildet sein. Es versteht sich, dass der erste rohrförmige Körper und der zweite rohrförmige Körper in oder außerhalb des Behälters in einer gemeinsamen Leitung zur Zuführung des Transportfluids münden können.

Zweckmäßigerweise weist der Einlass eine vorteilhafterweise geradzahlige Vielzahl, vorzugsweise zwei, erste und/oder zweite Einlassdüsen auf, welche vorzugsweise jeweils gegenüberliegend angeordnet sind. In anderen Worten sind vorteilhafterweise jeweils ein oder mehrere Paare von ersten Einlassdüsen bzw. ein oder mehrere Paare von zweiten Einlassdüsen vorgesehen, wobei die Einlassdüsen eines Paares zweckmäßigerweise gegenüberliegend angeordnet sein können.

Erfindungsgemäß weist der Auslass eine Vielzahl, vorzugsweise zwei bis zehn, besonders vorzugsweise drei bis sechs und bevorzugterweise vier Auslassdüsen auf, welche linear zueinander angeordnet sind. Die Auslassdüsen sind vorzugsweise derart angeordnet, dass diese auf einer Geraden liegen. Erfindungsgemäß sind die Auslassdüsen derart konfiguriert, dass deren Ausströmrichtungen parallel zueinander angeordnet sind.

Vorzugsweise ist der Auslass als rohrförmiger Körper ausgebildet, an dessen Mantelfläche die Auslassdüsen in Form von Bohrungen vorgesehen sind und dessen Stirnseite vorzugsweise geschlossen ist. Hierdurch wird eine besonders einfach herzustellende Mischvorrichtung ermöglicht.

Vorteilhafterweise ist die Summe der Mündungsflächen der ersten und zweiten Einlassdüsen größer als die Summe der Mündungsflächen der Auslassdüsen. Hierdurch wird gewährleistet, dass die Parameter der Durchmischung des Pulver-Transportfluid-Gemischs sowie der dem Auslass zuzuführenden Menge des Pulver-Transportfluid-Gemischs durch die Fläche und Konfiguration der Mündung der Auslassdüse definiert und gesteuert wird.

Weiterhin vorteilhafterweise ist die Summe der Mündungsflächen der zumindest einen ersten Einlassdüse größer als die Summe der Mündungsflächen der zumindest einen zweiten Einlassdüse. Hierdurch wird gewährleistet, dass die Auslassdüsen zuverlässig von Ansammlungen von Pulver freigehalten werden können.

Weiterhin ist ein dentales Handinstrument für ein Pulverstrahlgerät offenbart, umfassend ein Handstück mit einem Griffteil, an dessen Vorderseite eine Auslassöffnung für ein Pulver-Transportfluid-Gemisch vorgesehen ist, und ein Kupplungsanschluss zum Anschließen einer Mischvorrichtung, wobei die Mischvorrichtung einen Behälter zur Aufnahme eines Pulvers, einen Einlass für ein Transportfluid und einen Auslass für ein Pulver-Transportfluid-Gemisch aufweist, wobei der Auslass zumindest eine Auslassdüse aufweist, wobei der Einlass zumindest eine erste und zumindest eine zweite Einlassdüse aufweist, wobei die Ausströmrichtung der ersten Einlassdüse die Einströmrichtung der Auslassdüse schneidet und wobei die Ausströmrichtung der zweiten Einlassdüse zur Ausströmrichtung der ersten Einlassdüse versetzt ausgerichtet ist. Das dentale Handinstrument weist somit ein Handstück auf, an welchem ein Griffteil angeordnet ist, wobei bezüglich des Griffteils vorderseitig eine Auslassöffnung angeordnet ist, aus welcher das, zweckmäßigerweise als abrasives Behandlungsmittel ausgebildete, Pulver und das Transportfluid austreten können.

Weitere Vorteile und Merkmale ergeben sich aus der nachfolgenden Beschreibung von bevorzugten Ausführungsformen der Erfindung mit Bezug auf die beigefügten Figuren, wobei einzelne Merkmale von einzelnen Ausführungsformen zu neuen durch die Ansprüche gedeckten Ausführungsformen kombiniert werden können. Es zeigen:
- • Figur 1:: Einen Querschnitt einer ersten beispielhaften Ausführungsform der erfindungsgemäßen Mischvorrichtung.
- • Figur 2:: Eine vergrößerte Teilansicht von Figur 1.
- • Figur 3:: Eine stilisierte Ansicht entsprechend Figur 1.
- • Figur 4:: Eine stilisierte Ansicht entlang Pfeilrichtung A aus Figur 3.
- • Figur 5:: Eine Querschnittsansicht einer weiteren bevorzugten Ausführungsform der erfindungsgemäßen Mischvorrichtung.

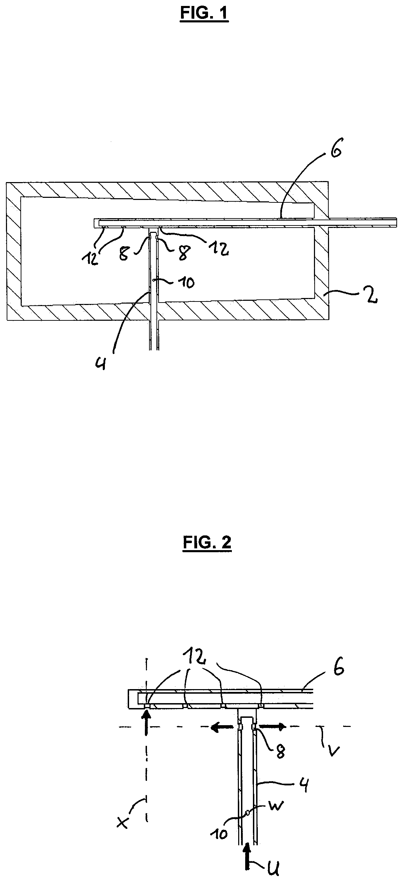

In Figur 1 ist eine erste, beispielhafte Ausführungsform einer erfindungsgemäßen Mischvorrichtung dargestellt. Diese weist einen Behälter 2, einen Einlass 4 sowie einen Auslass 6 auf.

Der Behälter 2 ist als Wirbelkammer ausgebildet und dient zur Verwirbelung bzw. Durchmischung eines in dem Behälter 2 vorgesehenen Pulvers (nicht dargestellt). In den Behälter 2 ragt ein Einlass 4 für ein Transportfluid, beispielsweise Luft, Wasser oder ein Gemisch hiervon. Der Einlass ist erfindungsgemäß als rohrförmiger Körper ausgebildet und weist bevorzugt jeweils ein Paar von gegenüberliegenden ersten Einlassdüsen 8 und zweiten Einlassdüsen 10 auf. Der Auslass 6 ist erfindungsgemäß gleichfalls als rohrförmiger Körper ausgebildet und ragt in den Behälter 2 hinein. Sowohl Einlass 4 als auch Auslass 6 sind stirnseitig geschlossen. An der Mantelfläche des Auslasses 6 sind vier Auslassdüsen 12 ausgebildet. Diese sind in Richtung bzw. parallel zu dem als rohrförmigen Körper ausgebildeten Einlass 4 ausgebildet.

Wie Figur 2 zu entnehmen ist, ist die erste Einlassdüse 8 zu der zweiten Einlassdüse 10 in Strömungsrichtung U des Transportfluids versetzt angeordnet insbesondere derart versetzt angeordnet, dass die zweite Einlassdüse 10 in Strömungsrichtung U gesehen vor der ersten Einlassdüse 8 angeordnet ist. Die erste Einlassdüse 8 weist eine Ausströmrichtung V und die zweite Einlassdüse 10 eine Ausströmrichtung W auf. Die Ausströmrichtungen V,W sind derart versetzt zueinander ausgerichtet, dass diese sich nicht schneiden. Erfindungsgemäß sind die Auslassdüsen 12 derart entlang einer Geraden angeordnet, dass deren Einströmrichtungen X parallel zueinander angeordnet sind. Um ein erfindungsgemäßes Freihalten der Auslassdüsen 12 von Pulver zu gewährleisten, schneidet die Ausströmrichtung V der ersten Einlassdüse 8 die Einströmrichtungen X der Auslassdüsen 12.

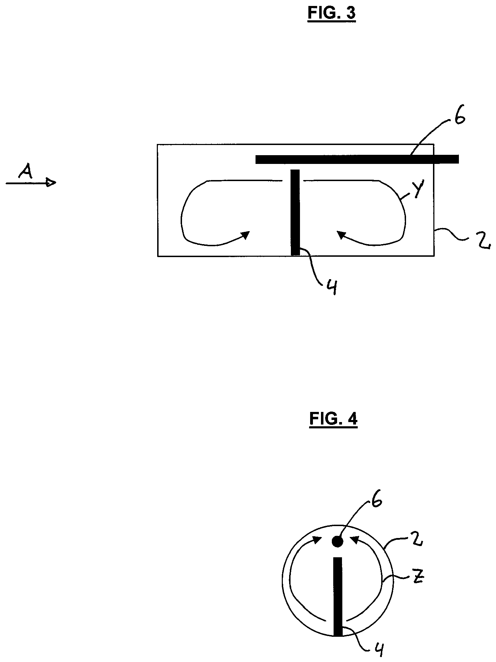

Dies bewirkt eine in den Figuren 3 und 4 dargestellte Verwirbelung des Pulvers in dem Behälter 2. Die ersten Einlassdüsen 8 bewirken eine Verwirbelung des Pulvers parallel zur Orientierung des Auslasses 6 und von diesem weg, wie mit den Pfeilen Y dargestellt. Um eine vorbestimmte Menge von Pulver der Auslassdüse 12 zuzuführen, bewirken die zweiten Einlassdüsen 10 eine Verwirbelung, die mit Pfeil Z dargestellt ist. Die Verwirbelung Z steht senkrecht zu der mit Pfeil Y dargestellten Verwirbelung und ist zu der Auslassdüse 12 bzw. dem Auslass 6 von unten nach oben hin gerichtet.

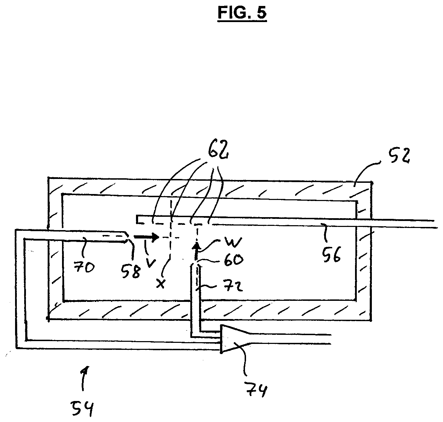

In Figur 5 ist eine weitere beispielhafte Ausführungsform der erfindungsgemäßen Mischvorrichtung dargestellt. Ähnlich zu der in Figur 1 dargestellten Ausführungsform ist ein als Wirbelkammer ausgebildeter Behälter 52 vorgesehen, in welchen in korrespondierender Art und Weise ein Auslass 56 mit entsprechend angeordneten Auslassdüsen 62 vorgesehen ist. Der Einlass 54 ist erfindungsgemäß aus einem ersten rohrförmigen Körper 70 und einem zweiten rohrförmigen Körper 72 ausgebildet, welche bevorzugt an der Außenseite des Behälters 52 in einem gemeinsamen Verteiler 74 sind. Der erste rohrförmige Körper 70 ragt in den Behälter 52 in im Wesentlichen paralleler Anordnung zu dem Auslass 56 hinein und ist an seiner Stirnseite mit der ersten Einlassdüse 58 versehen. Der zweite rohrförmige Körper ragt im Wesentlichen senkrecht zur Erstreckung des Auslasses 56 in den Behälter 52 hinein und ist an seiner Stirnseite mit der zweiten Einlassdüse 60 versehen.

Wie ersichtlich, schneidet die Ausströmrichtung V der ersten Einlassdüse 58 die Einströmrichtung X der Auslassdüse 62. Hierdurch wird gewährleistet, dass die Auslassdüse 62 von einer ungewollten Ansammlung von Pulver freigehalten wird. Um der Auslassdüse 62 die vorbestimmbare Menge von Pulver zuzuführen, ist die Ausströmrichtung W der zweiten Einlassdüse 60 derart angeordnet, dass diese, also die Ausströmrichtung W und die Einströmrichtung X, zwar parallel zueinander ausgerichtet sind, sich jedoch nicht schneiden und nicht zueinander fluchten.

### BEZUGSZEICHENLISTE

- 2: Behälter
- 4: Einlass
- 6: Auslass
- 8: Erste Einlassdüse
- 10: Zweite Einlassdüse
- 12: Auslassdüse
- 52: Behälter
- 54: Einlass
- 56: Auslass
- 58: Erste Einlassdüse
- 60: Zweite Einlassdüse
- 62: Auslassdüse
- 70: Erster rohrförmiger Körper
- 72: Zweiter rohrförmiger Körper
- 74: Verteiler
- U: Strömungsrichtung
- V: Ausströmrichtung
- W: Ausströmrichtung
- X: Einströmrichtung
- Y, Z: Wirbelrichtungen

## Patentansprüche

1. Mischvorrichtung für ein dentales Pulverstrahlgerät, umfassend
einen Behälter (2; 52) zur Aufnahme eines Pulvers,
einen Einlass (4;54) für ein Transportfluid, und
einen Auslass (6; 56) für ein Pulver-Transportfluid-Gemisch,
wobei der Auslass (6; 56) eine Vielzahl von Auslassdüsen (12; 62) aufweist und alle Auslassdüsen (12; 62) derart entlang einer Geraden angeordnet sind, dass deren Einströmrichtungen (x) parallel zueinander angeordnet sind,
wobei der Einlass (4; 54) zumindest eine erste (8; 58) und zumindest eine zweite (10; 60) Einlassdüse aufweist,
wobei der Einlass (4; 54) als ein in den Behälter hineinragender, rohrförmiger Körper, an welchem die erste und zweite Einlassdüse (8; 58) in Strömungsrichtung des Transportfluids versetzt angeordnet sind, ausgebildet ist oder
der Einlass (4; 54) aus einem ersten in den Behälter (2;52) hineinragenden rohrförmigen Körper, welcher die erste Einlassdüse (8;58) aufweist,
und einem zweiten in den Behälter hineinragenden rohrförmigen Körper, welcher die zweite Einlassdüse (10; 60) aufweist, ausgebildet ist,
wobei der Auslass als ein weiterer in den Behälter hineinragender rohrförmiger Körper ausgebildet ist,
wobei die Ausströmrichtung (w) der zweiten Einlassdüse (10; 60) zur Ausströmrichtung (v) versetzt ausgerichtet ist und
wobei die Ausströmrichtung (v) der ersten Einlassdüse (8; 58) die Einströmrichtungen (x) der Auslassdüsen (12; 62) schneidet, um ein Freihalten der Auslassdüsen (12, 62) von Pulver zu gewährleisten

2. Mischvorrichtung nach Anspruch 1, wobei die erste Einlassdüse (8; 58) zu den Auslassdüsen (12; 62) benachbarter angeordnet ist als die zweite Einlassdüse (10; 60).

3. Mischvorrichtung nach einem der vorhergehenden Ansprüche, wobei die Ausströmrichtung (w) der zweiten Einlassdüse (10; 60) die Einströmrichtungen (x) der Auslassdüsen (12; 62) nicht schneidet oder nicht mit diesen fluchtet.

4. Mischvorrichtung nach einem der vorhergehenden Ansprüche, wobei die Ausströmrichtung (w) der zweiten Einlassdüse (6) die Ausströmrichtung (v) der ersten Einlassdüse (8) nicht schneidet.

5. Mischvorrichtung nach einem der vorhergehenden Ansprüche, wobei die Ausströmrichtungen (v, w) der ersten (8; 58) und zweiten (10; 60) Einlassdüse in einem Winkel von etwa 60° bis 120°, vorzugsweise von etwa 80° bis 100° und besonders bevorzugt etwa 90° zueinander stehen.

6. Mischvorrichtung nach einem der vorhergehenden Ansprüche, wobei der Einlass (4) eine Vielzahl, vorzugsweise zwei, erste (8) und/oder zweite (10) Einlassdüsen aufweist, welche vorzugsweise jeweils gegenüberliegend angeordnet sind.

7. Mischvorrichtung nach einem der vorhergehenden Ansprüche, wobei der Auslass (6; 56) zwei bis zehn Auslassdüsen (12; 62) aufweist.

8. Mischvorrichtung nach einem der vorhergehenden Ansprüche, wobei der Auslass (6; 56) als rohrförmiger Körper ausgebildet ist, an dessen Mantelfläche die Auslassdüsen (12; 62) in Form von Bohrungen vorgesehen sind und dessen Stirnseite vorzugsweise geschlossen ist.

9. Mischvorrichtung nach einem der vorhergehenden Ansprüche, wobei die Summe der Mündungsflächen der ersten (8; 58) und zweiten (10; 60) Einlassdüsen größer als die Summe der Mündungsflächen der Auslassdüsen (12; 62) ist.

10. Mischvorrichtung nach einem der vorhergehenden Ansprüche, wobei die Summe der Mündungsflächen der zumindest einen ersten Einlassdüse (8; 58) größer als die Summe der Mündungsflächen der zumindest einen zweiten Einlassdüse (10; 60) ist.

## Claims

1. A mixing device for a dental powder jet device comprising
a container (2; 52) for receiving a powder,
an inlet (4; 54) for a transport fluid, and
an outlet (6; 56) for a powder transport fluid mixture,
the outlet (6; 56) having a plurality of outlet nozzles (12; 62) and all the outlet nozzles (12; 62) being arranged along a straight line such that the inlet directions (x) thereof are arranged parallel to each another,
the inlet (4; 54) having at least a first (8; 58) and at least a second (10; 60) inlet nozzle,
the inlet (4; 54) being formed as a tubular body projecting into the container, on which tubular body the first and second inlet nozzles (8; 58) are offsetly arranged in the flow direction of the transport fluid, or the inlet (4; 54) being formed by a first tubular body projecting into the container (2; 52) and having the first inlet nozzle (8; 58),
and by a second tubular body projecting into the container and having the second inlet nozzle (10; 60),
the outlet being designed as another tubular body projecting into the container, the outlet direction (w) of the second inlet nozzle (10; 60) being offset with respect to the outlet direction (v) and
wherein the outlet direction (v) of the first inlet nozzle (8; 58) intersects the inlet directions (x) of the outlet nozzles (12; 62) to ensure that the outlet nozzles (12, 62) are kept free of powder.

2. The mixing device according to claim 1, wherein the first inlet nozzle (8; 58) is arranged more adjacent to the outlet nozzles (12; 62) than the second inlet nozzle (10; 60).

3. The mixing device according to one of the preceding claims, wherein the outlet direction (w) of the second inlet nozzle (10; 60) does not intersect or not flush with the inlet directions (x) of the outlet nozzle (12; 62).

4. The mixing device according to one of the preceding claims, wherein the outlet direction (w) of the second inlet nozzle (6) does not intersect the outlet direction (v) of the first inlet nozzle (8).

5. The mixing device according to one of the preceding claims, wherein the outlet directions (v, w) of the first (8; 58) and second (10; 60) inlet nozzles are at an angle of about 60° to 120°, preferably of about 80° to 100° and most preferably about 90° to each other.

6. The mixing device according to one of the preceding claims, wherein the inlet (4) has a plurality, preferably two, first (8) and/or second (10) inlet nozzles which each are preferably arranged opposite to each other.

7. The mixing device according to one of the preceding claims, wherein the outlet (6; 56) comprises two to ten outlet nozzles (12; 62).

8. The mixing device according to one of the preceding claims, the outlet (6; 56) is formed as a tubular body, on the circumferential surface of which the outlet nozzles are provided in the form of bores and the end face of which is preferably closed.

9. The mixing device according to one of the preceding claims, wherein the total of the orifice areas of the first (8; 58) and second (10; 60) inlet nozzles is larger than the total of the orifice areas of the outlet nozzles (12; 62).

10. The mixing device according to one of the preceding claims, wherein the total of the orifice areas of the at least one first inlet nozzle (8; 58) is larger than the total of the orifice areas of the at least one second inlet nozzle (10; 60).

## Revendications

1. Dispositif de mélange pour un appareil de projection de poudre dentaire, comportant
un récipient (2 ; 52) pour recevoir une poudre,
une entrée (4 ; 54) pour un fluide de transport, et
une sortie (6 ; 56) pour un mélange de poudre et de fluide de transport,
dans lequel
la sortie (6 ; 56) comprend une multitude de buses de sortie (12 ; 62) et toutes les buses de sortie (12 ; 62) sont agencées le long d'une droite de telle sorte que leurs directions d'admission (x) sont disposées parallèlement les unes aux autres,
l'entrée (4 ; 54) comprend au moins une première (8 ; 58) et au moins une seconde (10 ; 60) buse d'entrée,
l'entrée (4 ; 54) est réalisée sous la forme d'un corps tubulaire qui pénètre dans le récipient et sur lequel sont agencées la première et la seconde buse d'entrée (8 ; 58) de façon décalée en direction d'écoulement du fluide de transport,
ou
l'entrée (4 ; 54) est constituée par un premier corps tubulaire pénétrant dans le récipient (2 ; 52) et comprenant la première buse d'entrée (8 ; 58), et par un second corps tubulaire pénétrant dans le récipient et comprenant la seconde buse d'entrée (10 ; 60),
la sortie est réalisée sous la forme d'un autre corps tubulaire pénétrant dans le récipient,
la direction d'évacuation (w) de la seconde buse d'entrée (10 ; 60) est orientée en décalage par rapport à la direction d'évacuation (v), et
la direction d'évacuation (v) de la première buse d'entrée (8 ; 58) recoupe les directions d'admission (x) des buses de sortie (12 ; 62) pour assurer que les buses de sortie (12, 62) soient libres de poudre.

2. Dispositif de mélange selon la revendication 1,
dans lequel
la première buse d'entrée (8 ; 58) est agencée plus près des buses de sortie (12; 62) que la seconde buse d'entrée (10 ; 60).

3. Dispositif de mélange selon l'une des revendications précédentes,
dans lequel
la direction d'évacuation (w) de la seconde buse d'entrée (10 ; 60) ne recoupe pas les directions d'admission des buses de sortie (12 ; 62) ou n'est pas en alignement avec celles-ci.

4. Dispositif de mélange selon l'une des revendications précédentes,
dans lequel
la direction d'évacuation (w) de la seconde buse d'entrée (6) ne recoupe pas la direction d'évacuation (v) de la première buse d'entrée (8).

5. Dispositif de mélange selon l'une des revendications précédentes,
dans lequel
les directions d'évacuation (v, w) de la première (8 ; 58) et de la seconde (10 ; 60) buse d'entrée sont disposées les unes par rapport aux autres sous un angle d'environ 60° à 120°, de préférence d'environ 80° à 100°, et de manière particulièrement préférée d'environ 90°.

6. Dispositif de mélange selon l'une des revendications précédentes,
dans lequel
l'entrée (4) présente une multitude, de préférence deux, premières (8) et/ou secondes (10) buses d'entrée qui sont agencées de préférence à l'opposé les unes des autres.

7. Dispositif de mélange selon l'une des revendications précédentes,
dans lequel
la sortie (6 ; 56) présente deux à dix buses de sortie (12 ; 62).

8. Dispositif de mélange selon l'une des revendications précédentes,
dans lequel
la sortie (6 ; 56) est réalisée sous forme de corps tubulaire sur la surface enveloppe duquel sont prévues les buses de sortie (12 ; 62) sous forme de perçages et dont la face frontale est de préférence fermée.

9. Dispositif de mélange selon l'une des revendications précédentes,
dans lequel
la somme des surfaces d'embouchure des premières (8 ; 58) et des secondes (10 ; 60) buses d'entrée est supérieure à la somme des surfaces d'embouchure des buses de sortie (12 ; 62).

10. Dispositif de mélange selon l'une des revendications précédentes,
dans lequel
la somme des surfaces d'embouchure de ladite au moins une première buse d'entrée (8 ; 58) est supérieure à la somme des surfaces d'embouchure de ladite au moins une seconde buse d'entrée (10 ; 60).
